# EUROPEAN PATENT SPECIFICATION

(11) **EP 3 322 879 B1**
(45) Date of publication and mention of the grant of the patent: **30.12.2020**
(21) Application number: 16741382.2
(22) Date of filing: 18.07.2016
(51) Int. Cl.: E21B 47/10, E21B 47/12, G02B 6/44, H02G 1/08

(54) **WELLBORE DEVICES AND METHODS**
BOHRLOCHVORRICHTUNGEN UND VERFAHREN
DISPOSITIFS ET PROCÉDÉS POUR PUITS DE FORAGE

(30) Priority: 16.07.2015 GB 201512479
(43) Date of publication of application: 23.05.2018
(73) Proprietor: Well-Sense Technology Limited, Aberdeen, Aberdeenshire AB21 7GA (GB)
(72) Inventor: PURKIS, Daniel, Aberdeen AB21 7GA (GB)
(74) Representative: Rankin, Douglas
(86) International application number: PCT/GB2016/052171
(87) International publication number: WO 2017/009671

(56) References cited:
- WO-A1-2007/061932
- WO-A1-2009/036897
- CA-A1- 2 252 400
- GB-A- 2 119 949
- GB-A- 2 349 440
- US-A1- 2003 172 752
- US-A1- 2008 272 931

## Description

### TECHNICAL FIELD

Described examples relate to wellbore devices that may be deployable in a well and methods of using the same, particularly in oil and gas operations.

### BACKGROUND

Oil and gas operations employ a plurality of downhole tools. Such tools may be deployed within the borehole temporarily to support temporary operations such as perforating, or may be run as part of a well pipe in wellbore completions to allow long-term repetitive operations.

In some instances, as for example in the case of a tool which is temporarily deployed within a wellbore to perform a certain operation, activation of the tool should occur at a precise location within the wellbore.

In other situations, as in a multi-zone well operation, the well pipe may comprise a plurality of permanently deployed tools that may need to be selectively activated at different times to allow treatment of, or fluid production, from different well zones as desired.

Various tools and mechanisms are heretofore used for the activation of downhole tools. However, sequential activation of a series of downhole tools, or activation of a downhole tool at a precise location may not always be an easy operation employing existing wellbore activation devices.

In some cases, downhole tools that are used in an operation may be retrieved after the operation is completed, for example, because the tools may be reused and/or to prevent obstruction of the wellbore. However, tool retrieval may require additional operations that require time and often the use of additional tools. Furthermore, smart downhole tools often employ expensive customized electronic components making retrieval of these tools necessary from an economic point of view.

Further, significant innovation has occurred in recent years in relation to monitoring or otherwise collecting data relating to tool properties when deployed, and/or well conditions. Examples of well conditions that may be helpful to monitor include sand production, well integrity (e.g. assessing leaks), flow allocation, etc.

However, the cost and time associated with installing appropriate systems to monitor well conditions can be significant. Typically, such monitoring systems may be considered during initial completion of the well, and any subsequent retrofit installation of sensors, or the like, to monitor well conditions may not be cost or time effective. The result of which could mean an underperforming well, or indeed a well having uncertain integrity, or the like.

GB2349440 (Sensor Highway) discloses a cable laying pig used to lay cable in a pipeline. GB2119949 (Standard Telephones) discloses a technique for deploying an optical fibre in a pipeline. US 2008/0272931 (Schlumberger) discloses a method and apparatus for measuring a parameter within a well using an optic fiber line.

This background serves only to set a scene to allow a skilled reader to better appreciate the following description. Therefore, none of the above discussion should necessarily be taken as an acknowledgement that that discussion is part of the state of the art or is common general knowledge.

### SUMMARY

Described examples relate to wellbore devices that may be deployable in a well and methods of using the same, particularly in oil and gas operations.

The described examples may assist with ease of deployment, ease of operation, as well as reducing costs, time and/or improving sensing capabilities within a wellbore.

In some examples, the wellbore device may comprise a deployable member. That deployable member may be packaged in a first configuration, and arranged to be deployed from said first configuration upon deployment of the wellbore device within a wellbore. In some examples, the deployable device may further comprise a first tool. That tool may, in some cases, be disposable.

In use, the wellbore device may be deployed within a wellbore from a first region. For example, a first end of the deployable member may be anchored at a location at or near the surface. As the device is deployed into the wellbore the deployable member may be deployed from its first configuration (e.g. from a packaged configuration).

The deployable member may be packaged in a first initial configuration in any suitable way allowing it to be deployed by gravity, fluid pumping, or any other means when the wellbore device is deployed within a wellbore. In some examples, the deployable device may be tractored into the wellbore, causing deployment of the deployable member. The first configuration of the deployable member may differ depending upon the deployable member employed.

The deployable member may be a spoolable member. The spoolable member may be wound around a spool mounted at the wellbore device. However, the envisaged examples are not limited to the use of a spool. In fact, in some instances, it may be advantageous to package a deployable member to a first configuration without the use of a spool since such an arrangement may reduce the overall weight and/or volume of the wellbore device and may also reduce the stresses applied to the deployment member.

The term "deployable member" as used herein may mean any suitable generally elongated member or group of elongated members that can be packaged in a first configuration with or without a spool allowing the elongated member to be deployed by gravity, fluid pumping or other means when the wellbore device is deployed within a wellbore.

The deployable member may be sufficiently thin to allow a sufficient length of the deployable member to be packaged or wound in a first initial configuration with or without a spool.

The deployable member may be sufficiently strong to hold the weight of the wellbore device including the weight of the deployable member itself (e.g. as well as an associated tool and any other associated components, if present).

The deployable member may be or comprise a line made from Vectran fibre, Kevlar fibre, monofilament polymer, steel, copper, glass fibre, fibre optic, or any other material that can be formed into a wire, thread, line or braid, and/or any combinations thereof. In some examples, the deployable member may provide a signal communication path (e.g. when comprising fibre optic, or the like).

The deployable member may be or comprise a steel line, such as one or more steel wires.

The deployable member may be or comprise a composite line, for example, made of a polymeric material, fibre optic, and/or steel, etc.

According to one example, the deployable member may be made from, or comprise, a degradable material. Such a degradable material may be configured to degrade or dissolve in a wellbore environment, for example, in the presence of wellbore fluids comprising oil, water and/or mixtures thereof. However, it should be understood that in some cases if a degradable material is used the rate of degradation or dissolution may be such that it allows proper deployment of any associated tool or the like to a desired location within the wellbore prior to failure or degradation of the deployable member.

The deployable member may comprise one or more layers of a protective material such as wax to delay the onset of the degrading and/or dissolution effects as may be needed.

Suitable degradable materials may include materials that are dissolvable in oil and/or water. Suitable materials may comprise an effective amount of polysaccharides, chitin, chitosans, poly(ethylene oxides), poly(phenyllactide), polyphosphatenes and the like. Examples of suitable degradable materials may include materials used in dissolvable surgical suture applications such as polyvinyl alcohol (PVOH), polyvinyl acetate (PVA aka poly(ethenyl ethanoate)), polyglycolic acid (PGA) and the like or bioplastics used in utensils and packaging such as thermoplastic starch, cellulose-based plastics, aliphatic polyesters such as polyhydroxyalkanoates (PHAs) such as poly-3-hydroxybutyrate (PHB), polyhydroxyvalerate (PHV) and polyhydroxyhxanoate (PHH), and polylactic acid (PLA).

A suitable deployable member may exhibit a sufficiently high strength, thermal stability and low stretch or deformation for supporting the weight of the wellbore device including the self-weight of the deployable member under the wellbore ambient temperature conditions.

The deployable member may exhibit a sufficiently high strength, thermal stability and low stretch or deformation for supporting the flow induced forces caused by the fluid flow around and along the deployable member suspended in the well as injection and/or fracturing fluids are pumped into the well.

The deployable member may be or comprise a composite member, for example, comprising an electrical and/or a fibre optic component to provide signal control, power and/or data communications as may be needed.

The deployable member may be of any suitable diameter provided that the deployable member is sufficiently thin to permit storing a sufficient length of the deployable member on the available volume provided with or without a spool. In some examples, the deployable member may have a diameter of 500 µm or less, such as 325 µm or less, or even around 25 µm or less.

The deployable member may be retrievable. Any suitable retrieving mechanism may be used. If the deployable device comprises a tool, then in circumstances in which the tool is disposable, only a very simple and light retrieving device or mechanism may be used such as, for example, a "fishing reel" type device or mechanism.

The deployable member may be or comprise a line capable of logging wellbore data. The deployable member may be configured to permit distributed sensing.

The deployable member may be or comprise a line capable of establishing data and/or signal communication between a first region of the line located within the wellbore and a surface device which may be operably connected to the deployment member. The data and/or signal communication may be one way or two way communication. Signal communication may be used to control the operation of the deployable device (e.g. disposable tool), for example via a command signal generated at the surface.

The deployable member may be or comprise a line capable of establishing data and/or signal communication between the first disposable tool and a surface device which may be operably connected to deployable member.

In examples in which the deployable device employs a tool, such as a disposable tool, or the like, and in which that tool, or the like, need not be retrieved to the surface, then the strength requirements of the deployable member may be substantially reduced, compared to when the device is intended to be retrievable. In such examples, this may allow the use of deployable members having less strength, such as using fibre optic line (which may be bare, or have minimal coating), than may otherwise be required if the device were to be retrieved to surface.

The deployable member may be or comprise a fibre optic line.

The fibre optic line may allow for sensing of wellbore conditions (e.g. logging wellbore data). The fibre optic line may allow for distributed sensing of wellbore conditions.

The fibre optic line may establish data and/or signal communication between a first region of the line located within the wellbore and a surface device which may be operably connected to the fibre optic line. The data and/or signal communication may be a one way or two way communication.

The fibre optic line may allow establishing data and/or signal communication between the first tool (e.g. disposable tool) and a surface device which may be operably connected to the fibre optic. The data and/or signal communication may be a one way or two way communication. For example, the surface device may include a light source. The light source may, by way of an example, comprise a laser and a surface interrogator of the type that may be used with fibre optic systems. For example, the light source may generate a light pulse at a desired frequency through the optic fibre which may then be backscattered to the surface interrogator. The surface interrogator may comprise software for analysing the received signals and deriving useful data such as the temperature, pressure, acoustics and the like at a region of the line deployed within the wellbore.

In some examples, the deployable device may comprise a light source (e.g. laser, interrogator, or the like) and be configured to analyse received signals (e.g. backscatter signals) at the deployable device.

The deployable member may comprise two or more deployable members. For example, according to one example, the deployable member may comprise:
a first deployable member suitable for data and/or signal communication; and
a second deployable member for providing support for the weight of the wellbore device and/or activating a tool mounted to the wellbore device, for example, after a particular length of the second deployable member has been paid out (e.g. the entire length of second deployable member).

In some examples, the first deployable member may be configured to permit communication between the deployable device and a surface device operably connected to the first deployable member.

According to a further example, the deployable member may comprise two deployable member lines.

The deployable member may comprise a first fibre optic line suitable for data and or signal communication between the deployable device (e.g. and first disposable tool) and a surface device operably connected to the first fibre optic line.

The deployable member may comprise a second deployable line selected from the group comprising a line made of Vectran fibres, Kevlar fibres, monofilament polymer, steel, copper, glass fibre, any other material. Such material may be formed into a wire, thread, line or braid and/or any combinations thereof.

The fibre optic line may be any suitable fibre optic line.

The fibre optic line may be a single mode fibre optic line.

The fibre optic line may be a multi-mode fibre optic line.

The fibre optic line and any related light source and interrogator modules may be any of the type commonly used for distributed sensing, such as distributed temperature sensing (DTS), distributed pressure sensing (DPS) and/or distributed acoustic sensing (DAS) applications, or the like.

According to a further example, the deployable device, and in particular the deployable member, may be configured, when deployed, to permit detection of leaks, e.g. to "listen behind casing", such as between a casing and a cement sheath in cased cemented wellbores. The deployable member may be configured, when deployed, to permit measurement of sand production, flow allocation, or the like.

The fibre optic line may be made of any suitable material. For example, the fibre core of the fibre optic line may be made of silica glass.

The fibre optic line may comprise a cladding layer. For example, the line may be coated with one or more protective layers such as, for example, a protective polymeric coating, to protect the fibre optic line against environmental damage. Environmental damage of fibre optic may include hydrogen darkening or embrittlement that may otherwise be encountered under adverse environmental wellbore conditions such as high temperature. Such environmental damage and may result in the failure of the fibre optic line before deployment of the first disposable tool to a desired location within the wellbore, or if an operator may desire to reuse the fibre optic line multiple times.

However, in some examples when the wellbore device need not be retrieved and reused after a first use, the fibre optic line employed need not be coated with any protective materials. Not employing any protective coating may be advantageous as it may reduce the overall cost and weight of the fibre optic line.

Some or all of the fibre optic line may include a strengthening layer. For example, one or more layer of Kevlar fibres may be applied, which may be provided for some or all of the line. For example a braided layer may be provided in the periphery of the fibre optic line to improve the strength of the fibre optic and/or protect against mechanical stresses which may hinder the optical performance of the fibre optic. Other strengthening materials may be used in instead of or together with the Kevlar fibres.

The core of the fibre optic line may be made of plastic.

The length and diameter of the fibre optic line may vary depending upon the specific application. However, a small diameter fibre optic line may be used to reduce the overall volume and weight requirements of the wellbore device. According to an example, a "hair-thin" fibre optic line may be employed with or without a second stronger deployment line as may be needed depending upon the weight requirements of the application.

The wellbore device may be used, *inter alia,* in, or to deploy sensors for, distributed sensing, e.g. DTS, DPS and/or DAS applications. The wellbore device may be used in wellbore applications requiring activation of a particular tool at a precise depth location. The wellbore device may be used in wellbore applications for obtaining well data, for example, as a function of the well depth. The wellbore device may be used for logging wellbore data.

In examples in which the deployable device comprises a disposable tool, then that disposable tool may be deployed or deployable within the wellbore with the wellbore device. Having the tool made of a disposable material may reduce the strength requirements of the deployable member since there is no requirement that the tool be retrieved to the surface.

The first disposable tool may be made of or comprise any suitable material.

The first disposable tool may be made of or comprise an effective amount of any suitable disposable material. Suitable disposable materials may include a polymer such as a polyolefin, a degradable or dissolvable polymer, a biodegradable material such as a biodegradable polymer, a dissolvable metal, a dissolvable metal alloy, a dissolvable metal composition, a frangible material such as a ceramic, or a glassy material, a frangible metal/ceramic material and/or the like.

The first disposable tool may be made of or comprise an effective amount of any suitable degradable material, including a biodegradable material.

The first disposable tool may be made of or comprise an effective amount of any suitable dissolvable material including materials that are dissolvable in water and/or oil.

The first disposable tool may be made of a combination of materials.

The first disposable tool may comprise a polymer such as polyolefins including but not limited to polypropylene, polyethylene, random copolymers and/or block copolymers thereof. The use of polyolefins may be advantageous because of their low, light weight, temperature resistance, structural strength and ease of processing.

The first disposable tool may comprise an effective amount of a degradable material that degrades under environmental well conditions so that upon full deployment of the wellbore device the disposable tool may be disposed within the well without obstructing well operations.

For example, the disposable tool may comprise an effective amount of a degradable polymer material such as a polymer that degrades upon exposure to water, oil and or combinations thereof. Suitable polymers may include but are not limited to polymers comprising one or more compounds selected from the group consisting of polysaccharides, chitin, chitosans, poly(ethylene oxides), poly(phenyllactide), polyphosphatenes and the like. Examples of suitable degradable materials may include materials used in dissolvable surgical suture applications such as polyvinyl alcohol (PVOH), polyvinyl acetate (PVA aka poly(ethenyl ethanoate)), polyglycolic acid (PGA) and the like or bioplastics used in utensils and packaging such as thermoplastic starch, cellulose-based plastics, aliphatic polyesters such as polyhydroxyalkanoates (PHAs) such as poly-3-hydroxybutyrate (PHB), polyhydroxyvalerate (PHV) and polyhydroxyhxanoate (PHH), and polylactic acid (PLA). An example of a polyglycolic acid (PGA) that may be used is commercially available under the tradename Kuredux by Kureha Corporation based in Tokyo, Japan.

According to some examples, the disposable tool may comprise an effective amount of a degradable polyester such as a poly(2-hydroxypropanoic acid) also known as polylactic acid ("PLA") produced from 2-hydroxypropanoic acid ("lactic acid"). In yet another example, the disposable tool may comprise an effective amount of a poly(hydroxyalkanoate)("PHA") such as poly(hydroxybutanoate) ("PHB"), or a random copolymer of PHB with blocks of poly(hydroxypentanoate)(aka polyhydroxyvalerate "PHV").

The disposable tool may comprise one or more natural materials such as for example various forms of limestone.

An example of a suitable dissolvable metal may include one or more metals reactive to water and or common completion fluids such as a metal alloy comprising a metal selected from the group consisting of lithium, gallium, indium, zinc and/or bismuth and an effective amount of a reactive metal such as aluminum, calcium, and or magnesium.

The rate of degradation/dissolution may be controlled to allow proper operation of the disposable tool during deployment. For example, the rate of dissolution may be controlled by controlling the water or oil absorbing capacity of the polymer matrix, the type and morphology of the polymer matrix, and the nature of the chemical bonds by which the monomers are linked.

The first disposable tool may be an integral part of the wellbore device.

The first disposable tool may be mounted to the wellbore device.

The first disposable tool may be a mechanical tool.

In some examples, the tool (disposable or otherwise) may be, for example, a drift, which may have a defined outside diameter that may be deployed with the wellbore device through the wellbore casing, tubulars and/or completion components. In such example, the drift may ensure wellbore accessibility without any obstructions or to confirm or find the location of any obstructions.

According some further described examples, a wellbore device is provided comprising a fibre optic line and a drift. The wellbore device may be deployed into the well and the drift allowed to be deployed within the wellbore via gravity, a pumping fluid action or any other suitable means. Such operation may be performed, for example, prior to a logging or perforating operation. At the surface, a surface device or module may be operably connected to a first region, e.g. a first end of the fibre optic line. The surface device may comprise a light source and an interrogator. The light source may generate light that travels through the fibre optic line and backscattered to the surface interrogator. The light may be generated in any suitable form and may be for example a continuous stream of light or a pulse of light.

The drift may be configured to confirm clear passage to a given depth for other tools such as intervention tools that may follow. As the wellbore device is being deployed into the well the fibre optic may also be deployed. Using optical range finding methods, an instantaneous depth and/or speed of the drift may be calculated and displayed real time at the surface. For example, an optical time domain reflectometer (OTDR) may be used capable of detecting one or more macro bends along the fibre optic and determining their location in relation to the total length of the fibre optic line. A bend inducer device may be used at the launch point of the fibre optic line to create and/or accentuate a macro bend to render the launch point macro bend more readily detectable.

If the well is successfully drifted, the drift may then be disposed within the well, for example at or near the bottom of the well where it may present little or no concern to the operations. The drift may dissolve/degrade over time eliminating any concerns of having a drift at the bottom of the well.

An obstruction in the well may be indicated by the drift becoming lodged in the tubing. For example, this may be indicated/calculated as a zero speed reading (e.g. indicated/calculated at surface and/or at the device). A stuck drift that is not retrieved would typically cause an obvious blockage problem, however in some examples the drift may dissolve/degrade therefore reducing and/or eliminating any blockage issues. The drift material may be selected taking into consideration the well conditions, for example, whether the well contains water, or oil, the well temperature, pressure, acidity and the like. On completion of the drift run the fibre optic may be retrieved back to the surface through a simplified stuffing box. Alternatively, if a disposable fibre optic line is used, the fibre optic may be released and allowed to remain in the well. In some embodiments the fibre optic may degrade over time.

A wellbore device may be employed to drift and log the wellbore at the same time, or after the drift has come to rest in the well. Accordingly, a wellbore device comprising a fibre optic line and a disposable drift may be deployed within a wellbore. A first end of the fibre optic line may be operably connected to a fibre optic surface module comprising a light source and an interrogator. Any suitable fibre optic module may be used including a DTS, DPS, and/or DAS module all being commercially available from a number of suppliers. For example if a DTS module is used, the temperature of the fibre optic at all locations along its length may be measured from the surface. As such, in some cases, no downhole electronics may be needed. Moreover, the temperature profile of the well may be logged either during deployment or during retrieval of the fibre optic.

The first disposable tool may be or comprise a smart tool having one or more electronic devices for performing one or more measurements, collecting data, communicating with downhole tools and the like. The electronics devices may be or comprise an electronics module. The one or more electronic devices may be made of any suitable materials and components. The one or more electronic devices may be made of any suitable materials and components used in consumer electronics.

Because is some case, the tool may be disposable in nature, electronic components of the smart tool may only need to withstand adverse wellbore conditions such as high temperature for a short period of time. Hence, use of consumer electronic materials and components may be used resulting in substantial cost savings. The one or more electronic devices may be positioned within a protective sheath. For example, use of a protective sheath may be advantageous in applications where the environmental conditions in the wellbore may cause a malfunction of the consumer electronics even for a short exposure.

The protective sheath may be made of any suitable material. Employing a protective sheath may provide sufficient protection for any consumer electronics employed in the tool for the short period of time that the disposable tool is designed to operate.

The protective sheath may be made or comprise a phase changing material (PCM) which may absorb heat energy without a substantial increase in its temperature.

Any suitable PCM may be used including various forms of wax, including but not limited to petroleum based wax such as paraffin wax.

The protective sheath may comprise an outer housing or container within which the electronics of the smart tool may be disposed. According to an embodiment the protective sheath may comprise an outer housing, and a PCM core disposed within the outer housing, wherein one or more electronics may be disposed within the PCM.

The housing of the protective sheath may be made of any suitable material.

The housing of the protective sheath may be made of plastic such as but not limited to polyolefins.

The housing of the protective sheath may be made of a degradable material such as a degradable plastic material similar to the ones employed for the disposable tool.

Because of a protective sheath and the disposable nature of the wellbore device low cost, consumer electronics may be used. For example, the electronics module of the smart tool may include one or more of consumer grade accelerometers, magnetometers, solid state giros, cameras. Moreover, due to the short operational time of the wellbore device in the well, the battery life requirement for the smart tool may typically be about 1 day or less, or 12 hours of less, such as 6 hours or less, or even 1 hour or less. Hence, it should be understood, that the wellbore device may be used in a number of wellbore applications by using a different smart tool.

For example, the first disposable tool may be a smart drift comprising an electronics module for collecting data such as the location of the drift, the speed of the drift, wellbore logging data such as the temperature, pressure and or acoustics, gamma ray data, and the like as the drift is deployed within the wellbore, or once the drift is deployed at a desired location within the wellbore. The electronics module may be connected to the deployable member so that at least a part of the electronics module may be retrieved to the surface. For example, the electronics module may comprise a memory module or memory card which may be retrievable to the surface. The retrievable part of the electronics module may be or comprise a reusable electronic device so that upon full deployment of the wellbore device the part of the electronics module which may be reused is retrieved to the surface while the remaining of the electronics module may be disposed within the well.

The retrievable part of the electronic module may be part of the smart drift.

The retrievable part of the electronics module may be mounted on a frame of the wellbore device and may be operably connected to the electronics module of the smart drift via one or more electronic connectors and or wires so that upon full deployment of the wellbore device the smart drift may be disposed within the well while the retrievable module containing the collected data may be retrieved to the surface.

The smart drift may be used in a number of different wellbore applications, for example the smart drift may be used to determine the precise location of casing collar or pipe couplings in the wellbore.

The smart drift may comprise a protective sheath for protecting the electronics. For example, according to one embodiment the smart drift may comprise a core made of a PCM such as wax, wherein one or more electronics are embedded within the wax. The core may be positioned within a housing or container made of a disposable material such as a plastic material. The plastic material may be made or comprise an effective amount of a degradable and/or dissolvable material.

According to further described examples, there is provided a wellbore device for locating the casing collars or pipe couplings in a wellbore, also referred to hereinafter as a CCL wellbore device, the CCL wellbore device comprising:
a deployment line such as a fibre optic line packaged in a first configuration and arranged to be deployed from said first configuration upon deployment of the wellbore device within a wellbore. In some examples, the deployment line may be operably connectable to a surface module via a first region thereof such as a first end thereof. The wellbore device may further comprise a tool, such as a disposable tool, operably connected to the deployment line via a second region thereof such as a second end thereof. In some examples, the tool may comprise an electronics module comprising a CCL tool.

The CCL tool may generally comprise one or more of magnets, coils of wire, such as copper wire, a voltage amplifier, an LED and a small battery/coin cell, or the like. Although, these components may not be dissolvable, they may nevertheless be disposed within the well with little or no concern

The first tool may be or comprise a gamma ray detector.

The first tool may be or comprise an explosive cutter.

The first tool may initiate the operation of a second tool. The second tool may also be a disposable tool deployed with the wellbore device (e.g. another disposable tool). Alternatively, the second tool may be part of a wellbore completion.

The first and/or second tools may be any suitable downhole tool. Examples of suitable tools may include but are not limited to a drift, a smart drift, a gamma ray detector, a perforation gun or a set of perforation guns, an explosive charge, a cutting tool such as a tubing cutter, a dart, a variable size dart that may change its dimensions such as an expandable or contractable dart, a drop ball, a variable size ball that may change dimensions such as an expandable or contractable drop ball, a flow control device such as a sliding sleeve, a down hole choke, a ball valve, a fluid loss device, a seal forming device such as a packer, a plug, a pump down plug, a variable size plug that may change its dimensions such as an expandable or contractable plug, a shifting tool, a device that uses slips to anchor itself into a tubing or casing, a tubing patch, a casing patch, a straddle tool and the like.

The first tool may be any tool that may be deployed into a well. The first tool may require to be activated at a particular location or at a particular time during a well operation such as for example a perforating gun.

The first tool may be a variable size tool such as an expandable dart which may expand upon initiation to obtain a larger effective diameter. Upon expansion, the expanded tool or dart may engage a corresponding operating mechanism such as a seat of a wellbore completion tool to cause the initiation of the operation of the wellbore completion tool. For example, the wellbore completion tool may be a sliding sleeve which upon engagement of the expanded dart with the seat of the sliding sleeve, the sliding sleeve may slide to an open position uncovering one or more ports to allow injection of a fluid into the wellbore as it is often desirable in fracing, chemical injection, well stimulation or wellbore fluid production operations.

The wellbore device may comprise a frame or housing for supporting the various components of the wellbore device.

The frame may comprise any suitable shape provided it may readily be deployed within the wellbore.

The frame may be made of, or comprise any suitable material including, but not limited to degradable material similar to the ones used for the disposable tool.

The wellbore device may comprise an activation mechanism for activating the operation of the first disposable tool.

The activation mechanism may be any suitable activation mechanism.

The activation mechanism may be initiated upon the deploying of a predetermined length of the deployable member. The activation mechanism may be initiated upon full deployment of the deployable member. In this manner, the disposable tool may be deployed and/or activated to a precise location within the wellbore as determined by the length of the deployable member that is loaded in the first configuration without the need of measuring the length of the deployable member that has been deployed. Other conditions may be included as prerequisites for the activation or initiation of the activation of the first tool. For example, the wellbore device may comprise a safety device that prevents initiation of the first tool unless a certain condition is met in order to prevent accidental activation.

The activation mechanism may be an integral part of the frame of the wellbore device. The activation mechanism may be a separate device operably connected to the deployable member. The activation mechanism may be a separate device that may be mounted to the frame of the wellbore device.

The activation mechanism may initiate the operation of the first tool. For example, the wellbore device may allow activation of the first tool at a precise wellbore location which is determined by the length of the deployable member that has been deployed.

The activation mechanism may initiate the operation of the first tool which in turn may then initiate or activate one or more downhole tools. For example, the first disposable tool may be an expandable dart which may be activated to expand before reaching a corresponding mating seat or mechanism of a downhole tool such as the landing seat of a dart or drop ball operated sliding sleeve tool. In this manner, the wellbore device may be used to selectively activate a specific tool within a series of identical tools positioned at different locations within a wellbore completion. For example, the present wellbore device may eliminate the need to provide downhole tools such as drop ball operated sliding sleeves with varying size ball seats, as the same sliding sleeves with identically sized seats may be selectively activated by use of the wellbore device.

The wellbore device may comprise a container for storing the packaged deployment member.

The wellbore device may comprise a spool for spooling the deployable member thereon. The spool may comprise a barrel or cylinder around which the deployable member may be wound. The spool may comprise a flanged cylinder or barrel.

The container and/or the spool may be mounted to the frame of the wellbore device. The container and/or the spool may be mounted to the frame using a releasable fastener that releases the coreless container and/or the spool after initiation of an activation mechanism.

The container and/or the spool may be an integral part of the frame of the wellbore device.

The container and/or the spool may be an insert that may readily be inserted within a corresponding pocket of the frame of the wellbore device.

The container and/or the spool may be loaded with the desired length of the deployable member before or after the spool is mounted or inserted on the frame of the wellbore device.

The container and/or the spool may be made of any suitable material including but not limited to metal, metal alloys, plastics, rubbers, water soluble plastics and rubbers, oil soluble plastics and rubbers, dissolving metals, dissolving metal alloys, dissolving metal composites, frangible materials such as ceramics, glassy materials, frangible metal/ceramics, other degradable or dissolvable materials and the like.

The container and/or the spool may have any suitable shape and size.

The container and/or the spool may be made or comprise an effective amount of a disposable material such as a degradable or dissolvable plastic similar to the ones used for the disposable tool.

The spool may be a single piece.

The spool may comprise a split arrangement comprising two or more cooperating parts. The two or more parts of the split arrangement spool may be held together in a first position via a holding mechanism whereas upon release of the holding mechanism the split arrangement may shift in a second position. Shifting of the split arrangement from the first to the second position may be a requirement for the initiation of the activation mechanism. Upon shifting of the split arrangement from the first to the second position the activation mechanism may be activated or initiated.

Various materials and or techniques may be used to control deployment or unintentional unwinding of the deployable member. For example, a wax, varnish, lacquer, grease or any other material with semi sticky properties may be applied on the loaded deployment member to keep the deployable member from deploying unintentionally. Also, for example, a friction device may be used. In some examples, such a device may be operably connected close to the launch point to provide a friction force to prevent unintentional unwinding of the deployable member. Various friction devices may be used such as a spring loaded device urging a pad such as a rubber pad against the deployment member, or slidably passing the deployable member through a through bore of a rubber material, or the like.

According to further examples, a friction device may be used. Such a friction device may comprise co-operating magnets arranged to press against the deployable member. In some cases, two magnets may be used. The friction device may comprise a first bore for deploying the deployment member through it. The magnets may be slidably contained within a second bore of the friction device so that a magnetic attractive force may cause the magnets to attract one another and press against the deployment member positioned between the two magnets. By adjusting the strength of the magnets the force applied on the deployment member by the magnets may be modified and thus the rate of deployment of the deployable member may be controlled. The magnets may be directly contacting the deployable member. Alternatively, pads of a different suitable material may be used between the magnets and the deployable member.

The wellbore device may be introduced within the wellbore using conventional methods and devices such as conventional lubricator devices, dart and/or ball launching devices, and/or by manually removing or breaking into a section of surface pipework. Such devices, methods and operations are well known to those skilled in this art and therefore will not be described in any detail.

Once inside the well, the wellbore device may have a first region of the deployable member anchored to a suitable location. The anchoring device may employ a hook, a knot, a clamp, a magnet or magnets or any other suitable method to secure the first end of the deployable member.

The wellbore device may be deployed immediately once it is introduced into the well or it may be held within a surface launcher until such time as deployment is required. A method by which the wellbore device may be held may be or comprise, for example, a valve in a closed position which when moved to an open position allows the wellbore activation device to deploy into the well. Multiple wellbore devices may be held awaiting sequential deployment. Various holding and launching devices may be used without departing from the scope of the present invention. Once the wellbore device is released from the holding device it is said to be deployed or launched. Gravity may then cause the wellbore activation device to fall down the well causing deployment of the deployable member.

The wellbore device may also be deployed within a wellbore by the injection of a fluid. Such a method may be employed, for example, if the well is to be fractured or stimulated by chemical injection.

Deploying the wellbore device by pumping fluid into the well allows the wellbore activation device to access deviated or horizontal wells where gravity may not be sufficient to transport the wellbore activation device to a specified location.

The wellbore device may be deployed within a wellbore by the combined action of gravity and a pumped fluid.

The wellbore device and method may provide deployment and/or activation of a first disposable tool at a precise location within a wellbore. The present invention wellbore activation device may also facilitate the sequential activation of a series of wellbore tools.

According to a further described example, an autonomous perforating system and method may be provided for perforating a well at a desired depth. The autonomous perforating system and method may be employed in single or multi-zone completions. The autonomous perforating system and method may be particularly advantageous in multi-zone completions. Accordingly, a wellbore device comprising a deployment member and a perforating gun may be deployed inside a wellbore. The deployment member may be connected at its lower end or near its lower end to a firing head. The firing head may be adapted to be initiated and fire the perforation gun once the deployment member is partially or fully deployed. The deployment member may be or comprise a substantially zero-stretch, or low stretch line, such as a line made of Kevlar fibre, prespooled to an exact length equal to the depth of the required perforation depth.

With the deployment member anchored within a lubricator the perforating gun may be deployed within the wellbore. As the wellbore device is being deployed, the deployment member is also deployed and once the perforation gun reaches the desired depth the Kevlar thread pulls free of the firing head causing the gun to detonate. Hence, the accuracy of the perforation placement may be a function of the accuracy in cutting the Kevlar thread to length. After the perforating gun has been fired the firing head and the gun may fall to the bottom of the well where they may degrade overtime.

In yet another example, the Kevlar thread may be replaced by a fibre optic. By using an optical range finding module such as a laser range finding module a very accurate measurement of the length of the fibre could be achieved, for example by using an OTDR to measure the reflection at the end of the line. This would be particularly useful in the field where the length could be measured and cut to a new size. The length could be easily verified immediately before deployment with the spool mounted in the firing head.

In yet another embodiment the Kevlar thread could be braided to incorporate a fibre optic thereby combining the strength of Kevlar and the data transmission capability of optic fibre.

In yet another embodiment of the autonomous perforation method, the Kevlar could be braided to incorporate copper wires. This may be advantageous in applications where data rate and electrical noise are not critical because of the overall lower cost.

The perforating gun could be replaced by an explosive tubing punch tool or an explosive tubing cutter.

The wellbore device may be employed with any operation that requires perforating guns to be deployed on slick line or e-line including re-perforating shallow vertical wells associated with coal bed methane (CBM) production.

The wellbore device may also be used in running and setting a plug in a well. Accordingly the wellbore device may comprise a first disposable tool comprising a plug and a setting tool. The setting tool may be any suitable setting tool such as, for example, a gas generating power charge that may be ignited when the plug reaches the desired depth in much the same manner as the free falling perforating gun tools. The setting speed may be moderated to prevent slip damage to the tubing by controlling the burn rates of the used power charges to achieve a soft set according to well-known methods in the industry.

The wellbore device may also be used in plug, punch and cut operations. Such operations are well-known and are used during well abandonment in order to remove the tubing from the abandoned well.

The wellbore device may also be used for fracking conventional, cased hole wells and/or unconventional, open hole wells to successively perforate then stimulate multiple locations in the well.

Specifically, according yet to another example there is provided a plug-and-perf method for multistage treatment for cased hole wells, the method comprising:
providing a wellbore completion having a plurality of no-go rings;
providing a wellbore device having an obstructing member such as a plug, a drop ball or a dart and a perforation gun;
deploying the wellbore device to position the obstructing member to a first no-go ring to isolate a first zone of the well; and
activating the perforation gun to perforate a second zone situated above said first zone.

The obstructing member may have any suitable shape and size for blocking the opening of the no-go ring.

The plug-and-perf method may comprise pumping a stimulation or treatment fluid into the wellbore and through the perforations into the formation. Upon completion of the stimulation of a first zone, a second obstructing member and perforation gun may be deployed within the wellbore with the wellbore device to plug-and-perf another zone of the formation.

The process may be repeated as many times as needed. One advantage of using such a wellbore device may be that the obstructing member and the perforation gun may be deployed at the same time and arranged so that upon positioning of the obstructing member within or on the no-go ring the perforation gun may then be fired almost instantaneously thus significantly reducing the time needed for such operation.

The plug-and-perf method may employ a variable size obstructing member. This is advantageous as it may allow isolation of different zones of the formation using only one type of no-go ring in the completion.

According to yet another example of the plug-and-perf method the no-go rings are not pre-installed in the completion but are installed during deployment using the wellbore activation device. For example, a wellbore activation device may be equipped with a no-go ring, and a perforation gun which may be deployed simultaneously within the wellbore at a desired location. A no-go ring may be anchored or swaged to the internal wall of the tubular of the completion using any suitable method including, for example, an explosive method. According to one example, an expandable no-go ring may be employed having one or more spikes on its external wall, wherein the spikes are designed to anchor the no-go ring on the internal wall of the completion tubular by expanding the no-go ring when the no-go ring reaches the desired location within the completion. The force to expand the no-go ring may be generated, for example, using a plurality of explosive shaped charges positioned in the internal diameter of the no-go ring, designed to force the no-go ring outwardly upon initiation thus causing the no-go ring to expand and force the spikes to anchor to the tubular of the completion. The perforating gun is initiated to perforate the wellbore above the no-go ring. An obstructing member such as a plug, a drop ball, or a dart may be pumped to block the opening of the no-go ring so that a treatment fluid is diverted through the perforations into the formation.

Using the wellbore device, multiple zone fracking may be obtained using a one size ball method. The one size ball passes through all inflow devices until the spooled Kevlar thread is completely de-spooled, the ball is then triggered to increase in diameter thereby landing in and activating the next inflow valve. The ball acts as a flow diverter until it eventually dissolves / degrades away. The Kevlar thread is pulverised by the frac sand and its benign particulates pumped into the well.

According to a described example, there is provided a method for determining the precise depth of where a particular wellbore measurement is taken from. Accordingly, the deployable member may be loaded at a first configuration with a precisely pre-calibrated length. For example, the wellbore device may comprise a fibre optic line for establishing data and or signal communication between a surface device and the fiber optic line and a precisely pre-calibrated length of a second line made of any suitable material for deploying and activating the first tool once the whole length of the second line is fully paid out. Such a configuration may enable precise activation of the first disposable tool at a desired location within the wellbore while at the same time may ensure real time data and signal communication between the first tool and a surface device that may be operably connected to the fibre optic line.

According yet to another example, there is provided a method for deploying and activating a downhole tool at a precise downhole location using a signal generated from the surface, the method comprising:
providing a wellbore device comprising a first disposable tool and a fibre optic line packaged in a first configuration and arranged to be deployed from said first configuration upon deployment of the wellbore device within a wellbore;
deploying the wellbore device into the wellbore;
monitoring the location of the first disposable tool within the wellbore; and
activating the operation of the first disposable tool via a signal transmitted from the surface.

The first disposable tool may be a perforation gun that may be detonated at a precise location using a signal generated at the surface and transmitted via the fibre optic line to a detonation mechanism associated with the perforation gun. Monitoring the location of the first disposable tool within the wellbore may be obtained using an OTDR for detecting one or more macro bends along the length of the fibre optic.

In some examples, there is described a deployable device for deployment in a wellbore. The deployable device may comprise a deployable member comprising a fibre optic.

The member may be stored in a first configuration prior to deployment, and arranged to deploy to a second configuration during deployment. The deployable member may be configured to permit sensing, such as distributed sensing, using the deployed fibre optic when in the second configuration.

In some cases, the first configuration may be considered to be a wound configuration (e.g. bundled, coiled, etc.). At least some of the deployable member may be stored in the first configuration in a particular manner so as to impart or assist with linear deployment of fibre optic in the second configuration.

The device may be configured such that, when deployed to a second configuration, the deployable member provides one or more coiled portions of fibre optic in the wellbore. A coiled portion need not be helically wound, per se, but rather any bundle of member that could otherwise serve to provide increased resistance/sensitivity compared to other portions of the member. In some cases, the device may be configured such that the coiled portions of fibre optical are provided at one or more sections along the length of the deployable member.

The deployable member may be stored in the first configuration in a particular manner (e.g. with an initial characteristic orientation or laydown) so as provide the coiled portion(s) of fibre optic when deployed in the second configuration.

The device may be configured to retain some of the deployable member with the device, when in the second configuration, in order to provide the coiled portion of fibre optic. In some examples, the device may comprise two or more device sections. The device sections may be configured to be cascade deployment of the deployable member. Each section may be configured to retain some of the deployable member with device, when in the second configuration, in order to provide the coiled portion of fibre optic.

The deployable member may be stored in the first configuration as a winding such that the deployable member pays out from an inner surface of the winding, when deployed.

In some examples, the device may be configured to permit controlled deployment of the device in a wellbore. For example, the deployable device may comprise a friction device. Such a friction device may be configured to impart a force to the deployable member, when being deployed. In some cases, the force may be selective so as to selectively control deployment.

The deployable member comprises two or more different coating characteristics, configured to provide controlled deployment of the device in a wellbore.

The deployable member may be configured to permit distributed acoustic sensing using the deployed fibre optic when in the second configuration.

The deployable device may comprise a tool for deployment in the wellbore, such as a drift, which may comprise an imaging system, or the like. The drift may comprise one or more sensors configured to measure well conditions. The sensors may be configured to communicate sensed conditions using the fibre optic of the deployable member.

The device is configured to be deployed in the wellbore in a non-permanent manner (e.g. be configured to be deployed in a wellbore for 1 day or less). The device is configured to be disposable in the wellbore.

Some or all of the deployable member may comprise a reinforcing and/or protective coating surrounding the fibre optic. The coating may comprise Kevlar.

In some examples, there is described a distributed sensing arrangement.

Such an arrangement may comprising a deployable device according to any of the above, and a fibre optic module for provide distributed sensing.

In those cases, the fibre optic module may be in operative communication with the fibre optic of the deployable member. For example, the fibre optic module may be configured to provide distributed acoustic sensing using the fibre optic of the deployable member.

In some examples, there is described a distributed sensor arrangement deployed in a wellbore. The arrangement may comprise a fibre optic member having one or more coiled portions defined in the fibre optic member. Such an arrangement may be configured to assist with improved resolution/sensitivity at particular regions in the wellbore. The regions of the well may be regions of interest including one or more of: regions of expected leaks, inlet ports, lateral tubing connections, etc. The coiled portions of fibre optical may be are provided at one or more sections along the length of the deployed fibre optic member. The coiled portions may be retained within one or more sections of a deployable device, the deployable device having been used to deploy fibre optic member in the wellbore.

There is also described a method for deploying a fibre optic in a wellbore.

The method may comprise storing a deployable member comprise a fibre optic in a first configuration with a deployable device.

The method may comprise deploying the deployable device to a second configuration in the wellbore so as to deploy the deployable member and fibre optic. Such an arrangement may permit subsequent distributed sensing using the deployed fibre optic.

The method may comprise storing a deployable member comprising a fibre optic in a first configuration in a particular manner so as to impart or assist with linear deployment of fibre optic in the second configuration (e.g. winding the fibre in a particular manner). The method may comprise deploying the deployable member so as to provide one or more coiled portions of fibre optic in the wellbore. The deployable device may be deployed in the wellbore by gravity, fluid pumping or tractoring.

The method may comprise performing distributed sensing using the deployed fibre optic, such as distributed acoustic sensing. The method may comprise disposing of the fibre optic in the wellbore subsequent to performing distributed sensing.

The method may comprise sensing in order to assess one or more of sand production, well integrity (e.g. assessing leaks), flow allocation, offset seismic applications (e.g. sensing vibrations or the like from another well).

The method may comprise deploying subsequent to previous installed completion or intervention procedures installing other sensors. The method may comprise deploying in producing or previously producing well, or indeed injector well.

The method may comprise deploying in a well having a pre-existing optical fibre installed. The method may comprise calibrating or checking on fibre system with the other.

In some examples, there is described a method for winding a fibre optical line for deployment in a well. The method may comprise winding the fibre so as to be stored in a first stored configuration and so as to impart or assist with linear deployment of the fibre optic in a second deployed configuration. The method may comprise winding the fibre so as to provide one or more coiled portions of fibre optic in the wellbore.

It should be understood that any features described in relation to one aspect or embodiment of the invention may also be used in relation to any other aspect or embodiment of the invention.

Other advantages of the present invention wellbore device will become apparent to a person skilled in this art from the detailed description in association with the following drawings.

### BRIEF DESCRIPTION OF THE DRAWINGS

These and other aspects of the present invention will now be described, by way of example only, with reference to the accompanying drawings, in which:
Figure 1 is a simplified, diagrammatic, longitudinal cross-sectional view of a wellbore device comprising a fibre optic deployable member and a drift.
Figure 1A is a simplified, diagrammatic cross-sectional view of a friction device.
Figure 2 is a simplified diagrammatic illustration of the wellbore device of Figure 1 deployed within a wellbore.
Figure 3 is a simplified, diagrammatic, longitudinal cross-sectional view of a wellbore device comprising a fibre optic deployable member and a smart drift.
Figure 4 is a simplified, diagrammatic, longitudinal cross-sectional view of a wellbore device comprising a deployable member and a smart drift with a retrievable electronics module.
Figures 5a to 5d show further examples of a deployable member being deployed;
Figures 6a and 6b show examples of a deployable device having elements;
Figures 7a and 7b show further examples of a deployable member being deployed;
Figures 8a, 8b and 8c show further examples of a deployable member being deployed using first and second device sections;
Figures 9a, 9b and 9c show further examples of a deployable member being deployed having different characteristics; and
Figure 10 shows a further example of a deployable device

### DETAILED DESCRIPTION OF DRAWINGS

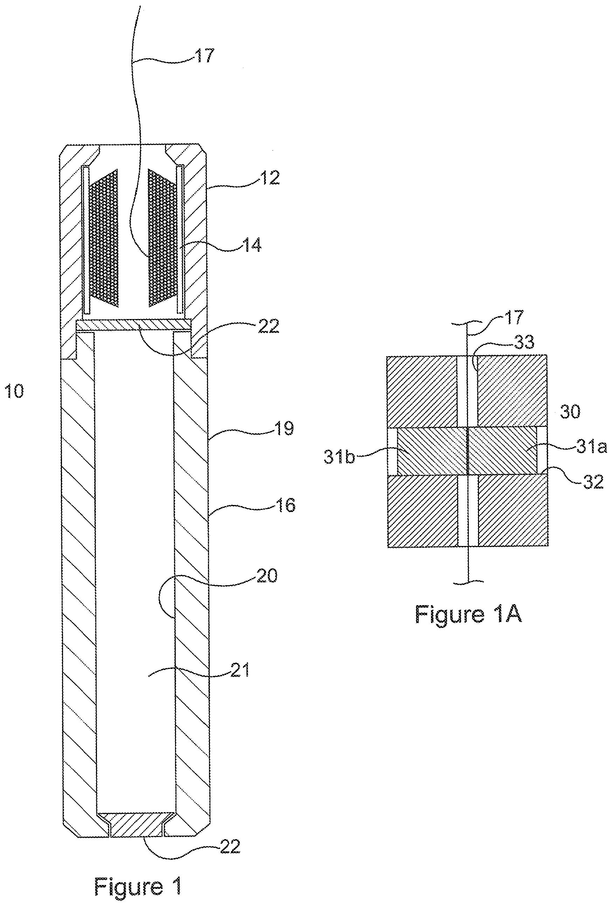

Figure 1 provides a simplified, diagrammatic, longitudinal, cross-sectional view of a wellbore device generally identified by reference numeral 10.

The wellbore device 10 comprises a frame or housing 12 comprising a container 14 mounted thereon. Within the container 14 is packaged in a first configuration a deployable member 17. In this example, the deployable member 17 comprises a fibre optic line. Here, the fibre optic may be provided as a bare fibre; that is a fibre without protective coating, or the like. In other examples described below, the fibre may indeed be provided with some form of coating. In any event, the fibre optic 17 is arranged to be deployed from this first configuration upon deployment of the wellbore device 10 within a wellbore (not shown).

The wellbore device 10 further comprises a tool 16 which in the embodiment disclosed is exemplified as a drift 16, and in particular a disposable drift. It will be appreciated when considering the following description that in some examples the device 10 need not comprise a tool per se, or any tool may be different from a drift 16, or may not be disposable. Here, however, for explanation the drift 16 is mounted to the frame 12 of the wellbore device 10. The drift 16 comprises a generally cylindrical housing 19 defining a hollow interior 20 and end plates 22 for closing the hollow interior. The hollow interior 20 may be filled with any suitable material, including a readily disposable material for adding weight as may be needed. Examples of suitable materials may include natural materials such as sand, rock and rock flour and/or artificial materials such as iron filings, liquid metal, dissolving plastic beads and the like generally indicated by the shading 21. At least one of the end plates 22 may be removably mountable to the housing 19 to allow ready opening of the drift 16 so that it may be filled with a suitable disposable material to add weight to the drift 16. Different materials may be used depending on the overall desired weight. The housing 19 and the end plates 22 may be made of a disposable material such as a low cost plastic material including but not limited to a polyolefin such as polypropylene and/or polyethylene. The housing 19 and the end plates may be made of a dissolvable material such as a dissolvable plastic material which may dissolve in water and/or oil. The selection of the precise plastic material may depend upon the conditions of the well including but not limited to the type of fluid contained in the well. Hence for example, if the well contains water then a water soluble material may be used for the housing 19 and/or the end plates 22 of the drift 16. If the well contains hydrocarbons then an oil soluble material may be used for the housing 19 and/or the end plates 22 of the drift 16. Other well conditions such as the temperature and acidity of the fluid in the well may be considered in selecting a suitable dissolvable material.

It should be also understood, that although the drift 16 is shown in the embodiment of Figure 1 having a hollow cylindrical shape filled with a weight material, that other shapes and configurations may be employed. For example, the drift 16 may be made of a solid cylinder made of a dissolvable material, or the drift 16 may be made of a solid cylinder made of an outer housing made of a slower tougher dissolvable material and an inner core made of a faster dissolvable material. Many other variations may be envisioned by a skilled person in this art after having read the present disclosure.

For example, although, the wellbore device 10 as shown in Figure 1 is equipped with a fibre optic line, it should be understood that other types of deployable members 17 may be used. For example, the deployment member 17 may comprise one or more lines made from Vectran and/or Kevlar fibres, monofilament polymer, steel, copper, glass fibre or any other material that can be formed into a wire, thread, line or braid. Further, in some cases, the deployable member 17 may include a first line providing data and/or signal communication and a second line for providing adequate mechanical support for the wellbore device. The deployable member 17 may also be spooled around a bobbin or spool, or the like.

Various materials and or techniques may be used to control deployment or unintentional unwinding of the deployable member 17. For example, a wax, varnish, lacquer, grease or any other material with semi sticky properties may be applied on the loaded deployable member 17 to keep the deployable member 17 from deploying unintentionally. Also, for example, a friction device 30 may be operably connected close to the launch point to provide a friction force to prevent unintentional unwinding of the deployable member 17.

An example of a friction device 30 is shown in Figure 1A. Friction device 30 comprises first and second through bores 32 and 33. Deployable member 17 is passed through bore 33. Co-operating magnets 31a and 31b (and in this example two magnets) are slidably contained within bore 32 so that they can slide and press against the deployment member 17 because of the attractive force between them. By adjusting the strength of the magnets 31a, 31b the friction applied on the deployable member 17 and/or the rate of deployment of the deployable member 17 may be controlled. The device 30 may further comprise means for securing it to the container 14 or some other fixed part of the wellbore device 10 (not shown). Although in the embodiment of Figure 1A the magnets 31a, 31b are applied directly on the deployable member 17, it should be understood that a pad of a suitable material may also be used between the magnets 31a, 31b and the deployable member 17. While in this example, the friction device 30 has been principally described using magnetics, it will be appreciated that in other examples other friction devices 30 may be used that are otherwise configured to impede or restrict free deployment of the member 17. In some examples, any friction device 30 may co-operate with selective coatings or the like of the member so as to provide a desired effect.

The deployable member 17 may include an electrical and/or a fibre optic component to provide support for example for control, power and/or data communication as may be needed.

According to one example, the deployment member 17 may be made from a material that degrades or dissolves in the presence of wellbore fluids.

The deployment member 17 may exhibit a sufficiently high strength, thermal stability and low stretch or deformation for supporting the weight of the wellbore device 10 under the wellbore ambient temperature conditions. The deployable member 17 may exhibit a sufficiently high strength, thermal stability and low stretch or deformation for supporting the self-weight of the deployable member 17 when it is fully unspooled and suspended in a well under the wellbore ambient temperature conditions. The deployable member 17 may exhibit a sufficiently high strength, thermal stability and low stretch or deformation for supporting the flow induced forces caused by the fluid flow around and along the deployable member 17 suspended in the well as injection and/or fracturing fluids are pumped into the well.

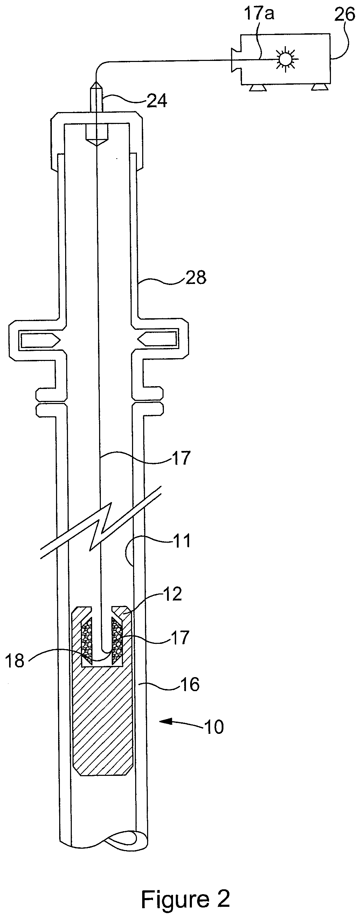

Referring now to Figure 2, an application of the wellbore device 10 will be described. The wellbore device 10 may be introduced within a wellbore 11. Tubular 28 is a diagrammatic simplified illustration of a wellhead region and comprises a device 24 such as a lubricator or stuffing box 24 for entering the wellbore device 10 inside the well head. Device 24 may also be a ball or dart launcher, a deployment head or any other suitable device for entering the wellbore device 10 inside the well head.

By way of an example, a first end 17a of the deployable member 17 is anchored through the lubricator 24 by a fibre optic feed through connector and is connected to a surface module 26. The other end is located in the container. The surface module 26 may be a laser range finder such as an OTDR used to measure the total length of the fibre optic by looking for light reflection from the deployed fibre optic line 17. The range finder may additionally or alternatively analyse backscatter along the length of the fibre. The point 18 at which the fibre optic transitions from being packaged (under bending stress) to being unpackaged (bending stress removed), also referred to as the launch point, may give a unique signature backscatter fingerprint. This in turn may feed into a calculation for determining an instantaneous depth and/or speed of the drift 16 as it is being deployed within the wellbore 11. The fibre optic line 17 may extend through a stress inducer element (not shown) as it is being deployed so that the induced stress may be more readily detected by the optical equipment at the surface.

The wellbore device 10 as shown in Figure 2 may be deployed within the wellbore via gravity, however, it should be understood that other methods of deployment may be employed such as, for example, via fluid pumping or a combination thereof. Fluid pumping may be employed, for example, in deviated or horizontal wellbores. Of course, in some examples, a tractor may be used in order to assist with deployment of the member 17 in the wellbore 11.

The drift 16 may confirm clear passage to a given depth for other tools such as intervention tools that may follow. As the wellbore device 10 is being deployed into the well the fibre optic 17 is also be deployed. Using well-known optical range finding methods, an instantaneous depth and/or speed of the drift may be calculated and displayed real time at the surface.

If the well is successfully drifted the drift 16 may then be disposed within the well, for example at or near the bottom of the well where it may present little or no concern to the operations. The drift 16 may dissolve / degrade over time eliminating any concerns of having a drift at the bottom of the well.

An obstruction in the well may be indicated by the drift 16 becoming lodged in the tubing 11, for example, this may be indicated at the surface as a zero speed reading. A stuck drift that is not retrieved would typically cause an obvious blockage problem, however the present invention drift may dissolve / degrade therefore reducing and/or eliminating any blockage issues. The drift material may be selected taking into consideration the well conditions, for example, whether the well contains water, or oil, the well temperature, pressure, acidity and the like. On completion of the drift run the fibre optic 17 may be retrieved back to the surface through stuffing box 24.

Alternatively, if a disposable fibre optic line 17 is used, the fibre optic may be released and allowed to remain in the well. Such fibres that are configured to remain in the well may have applicability in relation to distributed sensing (as is further described below). In some embodiments the fibre optic may degrade over time. However, for example, when provided a relatively simply fibre (e.g. a bare fibre) such degradation may only occur after a time that the fibre 17 has been used to perform sensing. It may be that is some cases, the deployed fibre (and any associated tools or other components) is only expected to be operable for a day or less, such as 12 hours, or less, or even 6 hours or less. In other words, the device 10 may be constructed in such a manner that the survivability of the fibre, device, etc. beyond a fairly short time frame is not expected. In such a way, the device 10 can be constructed at reduced cost compared to a permanent installation.

In this case, the wellbore device 10 may be employed to drift and log the wellbore at the same time. Accordingly, a first region such as first end 17a of the fibre optic line 17 may be operably connected to a fibre optic surface module 26 comprising a light source and an interrogator. In such a way, the deployable member 17 may be usable for the purposes of distributed sensing. Suitable fibre optic modules may be used including DTS, DPS, and/or DAS modules all being commercially available from a number of suppliers. For example if a DTS module is used, the temperature of the fibre optic at all locations along its length may be measured from the surface. In some examples, no downhole electronics may be needed. Moreover, the temperature profile of the well may be logged either during deployment or during retrieval of the fibre optic.

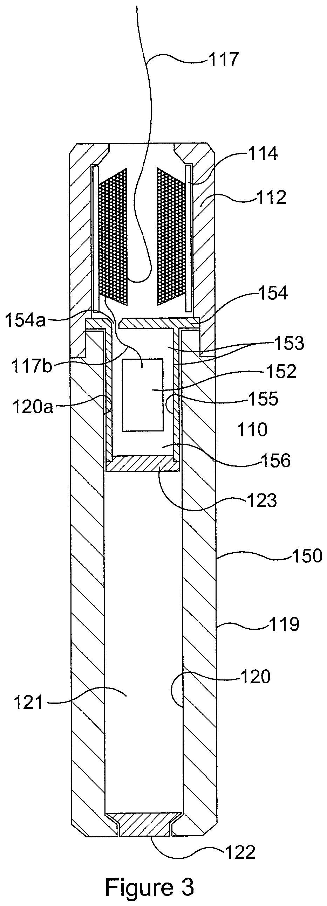

A wellbore device 110 according to another embodiment is diagrammatically illustrated in Figure 3. The embodiment of Figure 3 has many features in common with the embodiment shown in Figures 1 and 2 and for ease of reference we will refer to similar features using the same numerals we used for the embodiment of Figure 1 augmented by 100. Accordingly, the wellbore device 110 comprises a frame 112 comprising a container 114 within which there is packaged in a first configuration a fibre optic line 117. The fibre optic line 117 is arranged to be deployed from this configuration upon deployment of the device 110 within a wellbore (not shown).

The wellbore device 110 further comprises a smart drift 150 which is mounted to the frame 112 of the wellbore device. The smart drift 150 comprises a generally cylindrical housing 119 defining a hollow interior 120 and end plates 122 and 123 for closing the hollow interior. The hollow interior 120 may be filled with any suitable readily disposable material. Examples may include natural materials such as sand, rock, rock flour, and/or artificial materials such as iron filings, liquid metal, dissolving plastic beads and the like for adding weight as may be needed. At least one of the end plates 122 may be removably mounted to the housing 119 to allow ready opening of the smart drift 150 and filling it with a suitable disposable material.

The smart drift 150 further comprises an electronics module 152. The electronics module 152 may be protected within a heat shield arrangement 153 comprising a housing 154 and a phase change material (PCM) 156 filling a hollow space 155 defined between housing 154 and the electronics module 152. End plate 123 may be removably mounted to the housing 154 to allow filling the hollow space 155 within PCM material. End plate 123 may also serve as the upper end plate for defining the hollow interior 120 of the drift housing 119 which is filled with a disposable material 121. The electronics module 152 may be operably connected with one end 117b of the fibre optic via an opening 154a of the housing 154. The other end of the fibre optic 117 (not shown) may be connected to a surface module (not shown) in a similar manner to the embodiment described above with reference to Figure 2. The housing 154 may be positioned within an upper portion 120a of the hollow interior 120 defined by the housing 118 of the drift 150.

The electronics module 152 may comprise or be coupled to one or more sensors as may be needed. For example, sensors may include, for example, a pressure sensor, a temperature sensor, a CCL sensor, a gamma ray sensor, an ultrasonic wall thickness sensor, a calliper gauge, a cement bond sensor and the like. Other sensors may also be used. The data gathered may be signalled or transmitted to the surface via the fibre optic 217.

The heat shield arrangement 153 may be advantageous because it may enable the use of low cost readily available consumer electronic components, and batteries. Moreover, because of the disposable nature of the wellbore device 10, the heat shield may be designed to provide adequate protection to the consumer electronics and battery for the rather short time of deployment of the wellbore tool. Typically, this may not exceed 1 hour of operation in the wellbore, and more typically may not exceed 30 minutes or 10 minutes. Any suitable PCM which can absorb an adequate amount of energy without a significant change in the temperature of the PCM may be used. According to an example, a PCM material may be or comprise wax. Any suitable wax may be used. According to an embodiment a wax having a melting point in the range of from about 40 to about 60 degrees Celsius may be used. The wax may be a petroleum based wax such as a paraffinic wax.

Data collected by the one or more sensors of the electronics module 152 may be transmitted via the fibre optic line 117 to a surface module. Any suitable method of transmitting the data via a fibre optic line may be used.

In this way all the bulk of the hardware may be kept at the surface instead of in the tool.

Any well-known method of transmitting data via a fibre optic may be used including digital and analogue methods.

According to a further example, collected data may be transmitted as an analogue signal by varying the amplitude of a light source, e.g. an LED as a function of a sensor output. This technique may be advantageous because of its simplicity and because it may be used for a number of applications. For example, this technique may be used in a method for detecting casing collars with a CCL wherein the actual value of the CCL output does not matter but rather it is the shape of the wave form that may be used to determine the location of collars. For example a spike in the wave form may indicate the existence of a collar.

The housing 154 of the electronics module and the end plate 123 may be made of a degradable material which may degrade when exposed in wellbore conditions, for example they may be made or comprise an effective amount of a dissolvable plastic material which may dissolve in water and/or oil. The selection of the precise plastic material may depend upon the conditions of the well including but not limited to the type of fluid contained in the well. So for example, if the well contains water then a water soluble material may be used for the housing 154. If the well contains hydrocarbons then an oil soluble material may be used for the housing 154. Other well conditions such as the temperature and acidity of the fluid contained in the well may be considered in selecting a suitable dissolvable material for the housing 154 and the end plate 123.

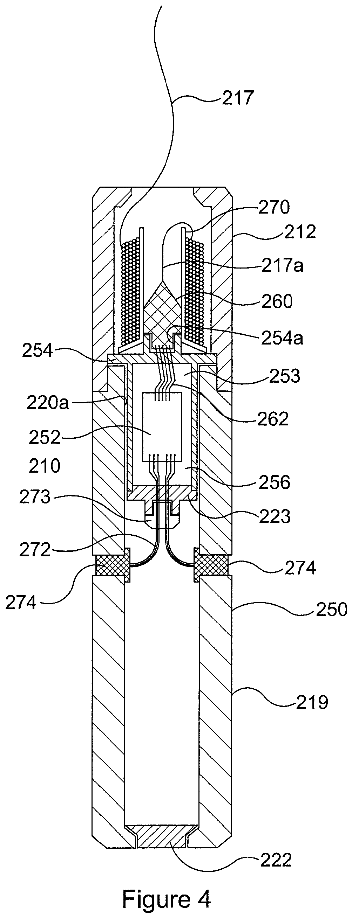

Referring now to Figure 4, a wellbore device 210 is provided according to yet another example. Wellbore device 210 has many features in common with the wellbore device 110 of Figure 3 and for simplicity similar features are denoted using the same numerals as for the embodiment of Figure 3 augmented by 100. Accordingly, the wellbore device 210 comprises a deployable member 217 connected at one end thereof 217a to a retrievable electronic module 260. The retrievable electronic module 260 is operably connected to the electronics module 252 of a smart drift 250 via one or more electronic terminal connectors and/or wires 262 so that during deployment of the wellbore device 210 inside the wellbore (not shown) data collected by sensors of the electronics module 252 may be stored into a memory housed within the retrievable electronic module 260. The retrievable electronic module 260 may be in the form of an insert adapted to be removably insertable to a corresponding mating receptacle 254a formed at the top of the housing 254 of the electronics module 252. The retrievable electronic module 260 may be removed and retrieved to the surface upon full deployment of the wellbore device 210 via the deployment member 217 using a reeling mechanism at the surface (not shown). Any suitable reeling mechanism may be used.

The deployment member 217 may be any suitable deployment member, including but not limited to a fibre optic line.

The deployable member 217 may be or comprise a line made from Vectran and/or Kevlar fibres, monofilament polymer, steel, copper, glass fibre or any other material that can be formed into a wire, thread, line or braid and may be spooled around a bobbin or spool 270.

According to one example, the deployment member 217 may comprise a Kevlar line and may not transmit data in real time to the surface. Alternatively, the deployment member 217 may be or comprise a smart line such as an electrical line or a fibre optic capable of transmitting data and/or signals in a single or two way communications between a surface module (not shown) and the retrievable electronic module 260. Upon full deployment of the wellbore device 210, the wellbore device including the frame 212, the spool 270 and the whole smart drift 250 including the electronics module 252, sensors and battery may fall to the bottom of the well and be permitted to dissolve or degrade.

The electronics module 252 of the smart drift is positioned within a heat shield arrangement 253 comprising a housing 254 and a PCM at an upper part of the cavity 220a formed by the housing 219 of the smart drift 250 as described above in reference to the embodiment of Figure 3.

The smart drift 250 may further comprise sensors 274 positioned outside of the heat shield protection. The sensors 274 may be wired back to the electronics module 252 via one or more wires 272 and a connector 273. Sensors 274 may have a higher operating temperature and hence may not need to be within the heat shield arrangement 253 that protects the electronics of the electronics module 252. Sensors 274 may be any suitable sensors. Sensors 274 may be, for example, sensing coils forming part of a casing collar locator (CCL) device. Sensors 274 may be a temperature and/or pressure sensor.

In some examples, one or more image sensors may be used with the device in any of the described examples. In some cases, such a device may be deployed in an optical pill. An example of an optical pill may have suitable visibility for the image sensors in the wellbore in order to image the wellbore wall (e.g. for inspection purposes).

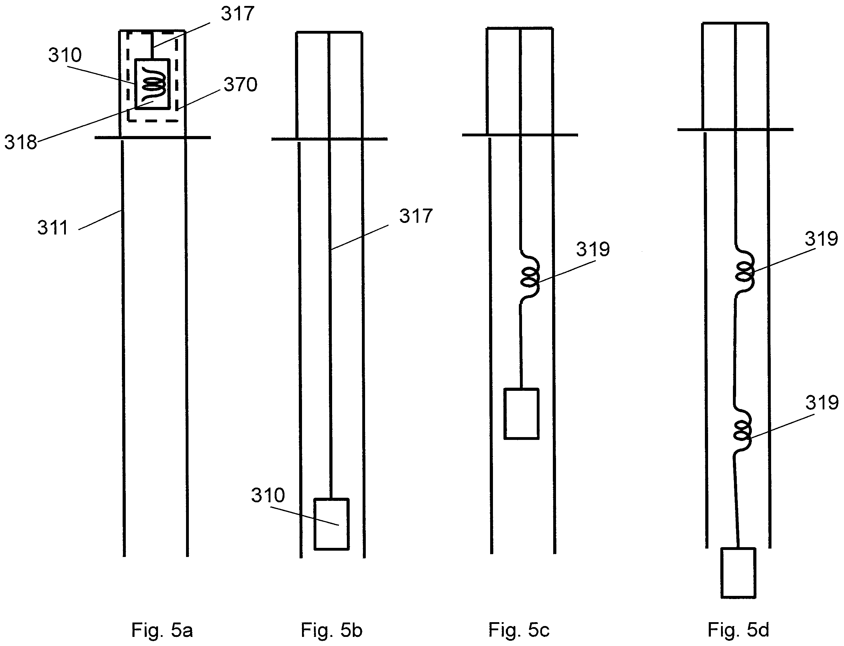

Figures 5a - 5d show a further example of a wellbore device 300 for deployment (and being deployed) in a wellbore 311. Again, the wellbore device 310 may have some or all features in common with the examples described above, as will be appreciated.

In the examples above, the wellbore devices 10, 110, 210 may be initially introduced or deployed from a lubricator, stuffing box or the like. Here, as shown in dashed lines in Figure 5a, the device 310 may be provided together with housing 370, e.g. in a preassembled manner, for coupling with the lubricator or the like. In such a way, the housing 370 comprising the deployable device 310 may be considered may be easily connectable to the lubricator or the like, without the need to couple a deployable member 317 to the lubricator. Also, characterisation of the device 310 (e.g. the deployable member 317) may be performed prior to installation.

When ready, the device 310 may be deployed from an open or openable end of the housing 370 in order to be deployed in the wellbore 311.

Again, the deployable member 317 here is stored together with the deployable device 310, which is fixed at a region of the housing 370. In this example, a feed-through or connector 375 may be provided in order to allow the deployable member 317 to be connected to surface module (e.g. for signal and/or power communication). In some examples, a portion of the deployable member 317 may be reinforced at the connection region. In one example, a portion of reinforcing sheath is provided at the connection region, and may extend for some of the deployable member 317. In doing so, accidental detachment of the fibre from within the housing may be avoided.

The deployable member 317 again may be stored with the wellbore device 300, and be configured to deploy as the device 310 is deployed in the wellbore 311. Here, as shown in Figure 5a, the deployable member 317 may be stored in a first configuration 318. Here, that first configuration 318 may be considered to be a bundled or wound configuration. Similarly, when deployed, the deployable member 317 may adopt a second configuration, which may be considered unwound or linear configuration. In some examples, the deployable member 317 may be wound around a spool or the like, within the deployable device 310, and configured to deploy therefrom. However, in other examples - as is the case here - the deployable member 317 can be considered to be stored as a layered winding without an inner spool (e.g. in a similar manner to that shown in Figures 1-3) and to pay out from the inner of the wound configuration. Storing the deployable member 317 in this manner may help provide a reduced profile for a similar length of stored deployable member 317.

In one example, in order to provide the deployable member 317 in this manner, the deployable member 317 may be initially wound around a support structure. In other words, a first inner layer may be wound around a support structure, and subsequent layers of member 317 being wound on top of those initially-laid inner layers. Subsequently the support structure may be removed so as to remain, in place, the first configuration 318. In some examples, a collapsible/retrievable support structure may be used, or otherwise a dissolvable/flowable structure may be used. It will be appreciated that depending on the forces used when laying down the member 317, residual stresses may be apparent in the wound configuration 318, which may assist in holding the windings together, even without a support structure present.

In this particular example, the deployable member 317 comprises a fibre optic line, or the like, suitable for distributed sensing. While in many examples, a fibre without coating may be employed for the deployable member 317 - which can help reduce weight, costs, and/or improve the length of fibre that can be stored within a certain volume - in other cases a coating may be provided. Such a coating may help provide a cushioning effect against overlapping windings, and so improve robustness and reduce likelihood of fracture. By way of an example, the bare fibre may be in the order of 25 µm or less, while with the coating it may be in the order of 325 µm or less. Further, in some examples, the fibre (bare or otherwise) may be stored in grease, or the like, again which may help improve robustness. In some cases, the provision of grease, when deployed, may help adhere the deployable member 317 to the bore wall.

In other examples, the device 310 and in particular the deployable member may comprise a plurality of retaining elements provided along some or all the length of the member 317. Such retaining elements may be specifically configured to fix the deployable member to the wellbore. The retaining elements may comprise magnets, or other fixing means.

It will be appreciated that in certain circumstances the step of initially winding the deployable member 317 may impart on the deployable member 317 a characteristic twist or otherwise helical characteristic to the deployable member 317 when deployed from the device 310. However, in situations where the deployable member 317 may be used for distributed sensing, such characteristics may be unhelpful and may reduce the overall depth that the fibre is provided. Further, accurate relative positioning of Bragg gratings or the like together with regions of interest in the wellbore 311 may be difficult. As such, there may in some cases be a desire to avoid any such twisted or helical characteristics when the fibre 317 is being deployed.

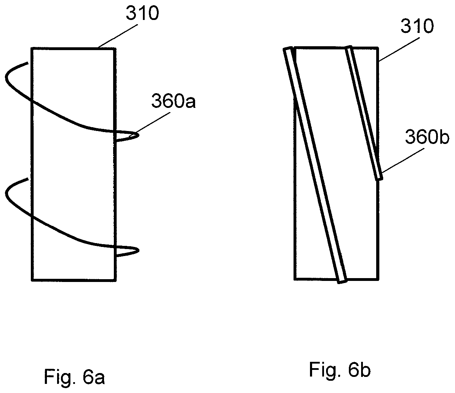

One method that may mitigate such characteristics, or at least improve the linear deployment of the member 317, may be to impart a counter rotation of the deployable device 310 during deployment. This may be achieved using rotational elements at the deployable device 310 that interact with fluid in the well (e.g. during deployment). Consider now Figure 6a and 6b, which show examples of such elements 360a, 360b, which may be used to provide impart a counter rotation at the device 310. While other elements may be used, here the elements 360a are provided as fins or ribs that extend from the surface of the device 310.

Of course, additionally or alternatively, the deployable member 317 may be initially wound such that, when deployed, the member 317 is deployed linearly without twisted or helical characteristics. In order to achieve this, the member 317 may be "pre-twisted" when initially layered in the wound configuration 318. Put in similar words, the step of winding the member 317 may include imparting a rotation of the member 317 as the member 317 is being wound on the support structure, or the like. The extent of the rotation (or pre-twist) may be selected based on the geometry of the wound configuration 318. One way in which to store the fibre in a wound configuration having characteristics that assist with a linear second configuration may be spool or wind the fibre initially (e.g. onto a support structure) at an angle different from the angle at which the fibre is unwound from the first configuration to the second configuration. For example, the winding angle may be obliquely orientated with respect to the axis of the overall fibre winding.

Consider now Figure 5b which shows the deployable member 310 having been deployed in the wellbore 311. Here, an essentially linear deployable member 317 has been deployed. In this case, twisted or helical characteristics may have been mitigated or avoided using the elements 360a, 360b and/or the initial pre-twist at the wound configuration. It will be appreciated that the term linear here, or in other words the absence of a helical twist, would also be true if shown in deviated wells.

Of course, in some examples an essentially linear distributed sensor (e.g. distributed acoustic, temperature and/or pressure sensor) may be helpful, but in other cases, retaining portions of the deployed member with a twist or helical arrangement, e.g. a coiled portion 319, may help improve the capabilities of the sensor at a region of interest. It will be appreciated that in some examples, due to the improved resolution/sensitivity, the coiled portion 319 may be used essentially as a point sensor. Further still, in some examples the distributed sensed signal from the remainder of the fibre may be of little or no importance compared to the coiled portion, which may be positioned at a region of interest within the wellbore.

Consider now Figures 5c and 5d in which a portion of the deployed member 317 comprises coiled portions 319. Here, the coiled portions 319 retain a wound characteristic (e.g. a helical characteristic). That wound characteristic may have been provided by the absence of a pre-twist, or indeed by a pre-twist in a complementary direction to the unwinding of the member 317. Similarly, the coiled portion 319 may be provided by a resilient coating or the like, configured to impart a particular structural form to the deployable member 319, when deployed.

In any event, the deployable device 310 may be configured such, when deployed, coiled portions 319 of the deployable member 310 are provided at regions of interest within the wellbore, such as regions of suspected leaks, or inlet ports, laterals, or the like. It will be appreciated that during distributed sensing, such as distributed acoustic sensing, that those coiled portions 319 may provide regions of greater data resolution or sensitivity, which may be helpful in accurately characterising sand production, well integrity (e.g. assessing leaks), flow allocation, or the like. It will be appreciated that the term "coiled" need not be limited to a wound coil of fibre, per se, but may be any relative bundle of fibre, of the like, which may provide improved sensor resolution/sensitivity compared to the other sections of the fibre.

It will be appreciated that in some examples, the deployable member 317 may be selectively initially wound and stored in the first configuration (e.g. with selective sections having a pre-twist) such that, when deployed in the second configuration, sections of the deployable member are essentially linear while others comprise a coiled portion 319, as will be understood.

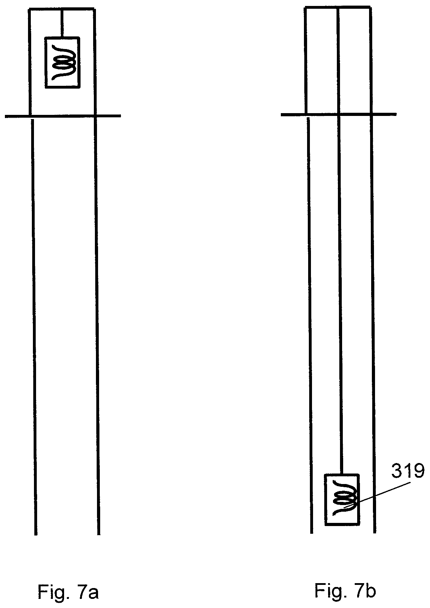

While in Figures 5c and 5d, the coiled portion 319 is provided during deployment of the deployable member 317 from the deployable device 310, in other examples this need not be the case. For example, consider now Figures 7a and 7b. Here, the deployable member 317 is initially stored in the first configuration 318 (e.g. wound configuration) prior to deployment, as above. However, when deployed, a coiled portion 319 of the deployable member 317 (e.g. fibre optic) remains with the deployable device 310. For example, the coiled portion 319 may remain within the housing of the device 310. By way of an example, the outer most layer (or outer layers) of the wound deployable member 317 may be fixed in order to retain them in a wound configuration. It will be appreciated that a region of improved resolution may then be provided in a similar manner to that described in relation to Figures 5c and 5d.

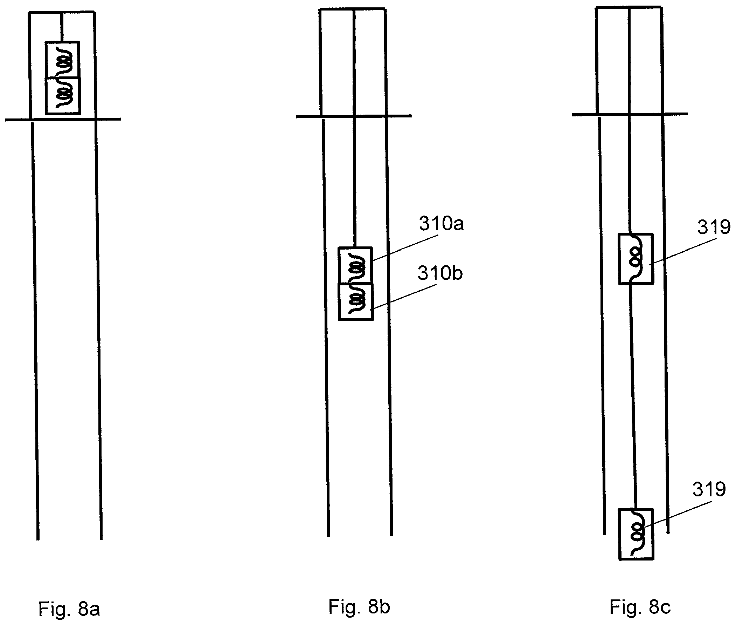

In some examples, as is shown in Figure 8a, 8b and 8c, the deployable device 310 may comprise cascadable sections (e.g. first and second sections 310a, 310b as shown). In Figure 8b, after the deployable member 317 has been deployed from the first section 310a, a deployable member 317 may then be deployed from the second section 310a. In each case, some of the deployable member 317 is retained within the sections as a coiled portion 319. A release mechanism may be used to cause separation of each section at a user defined time, or otherwise the second section 310b may be released after the first section has paid out, or vice versa.

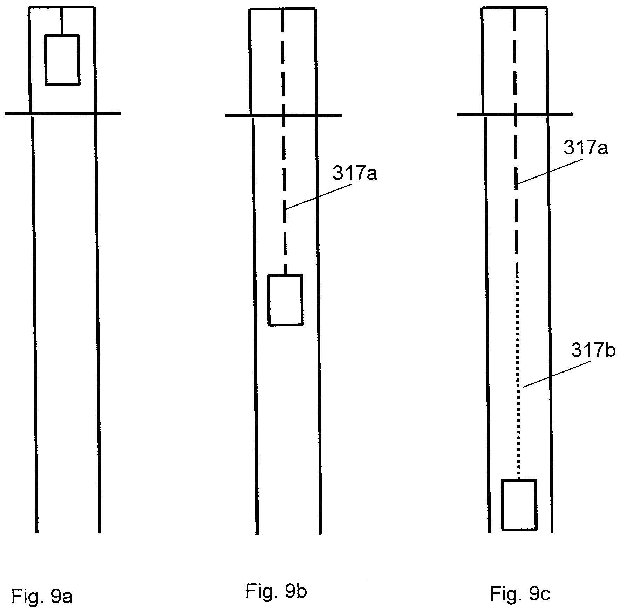

In some examples, whether deploying the member 317 with coiled portions 319, or not, there may be a desire to control the rate of deployment, for example when it is expected to be passing regions of restricted passage in the wellbore 311. In such cases, and as is shown in Figures 9a, 9b and 9c, the deployable member may be provided with different coating characteristic at different portions of the deployable member 317.

Here, a first portion 317 of the deployable member has a first characteristic 317a, such as a first coating characteristic (or absence of a coating), while a second portion of the deployable member has a second characteristic 317b, such as a second coating characteristic (or absence of a coating). Here, the device 310 may comprise a restriction, or friction device the same as or similar to that shown in Figure 1A. In use, different characteristics may be used to cause different deployment rates of the deployable device 310. In some examples, the deployable member 317, once deployed, may be used in a similar manner to that shown in Figure 2 in as much as optical module can be located at surface, outside of the wellbore 311, and used to communicate signals (e.g. signals suitable for distributed sensing, such as distributed acoustic sensing) along the deployable member 317.

It will be appreciated that in the examples disclosed herein that a friction device 30 or restriction or the like may additionally or alternative be used to control deployment of the deployable member 317 when that deployable member 317 has been stored in the first configuration with some compression, or such stress, that would otherwise urge the deployable member, upon release, to pay out quickly and uncontrollably. In that regard the friction device may be largely passive, but yet still configured to control deployment of the member 317. A skilled reader will readily be able to implement such examples accordingly.

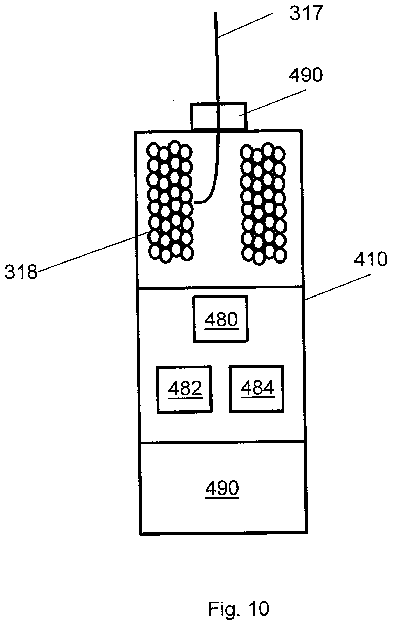

In some examples, the device 310 may be used to perform some action in the wellbore 311. It may be helpful if that action is performed at desired depth. Consider now Figure 10 in which a further example of a deployable device 410 is shown. Here, optical equipment is located with the device 410 itself. A light source 480 is configured to communicate an optical signal into the deployable member 417. As above (see point 18 in Figure 2), by way of measuring backscatter effects, the characteristic bend of the fibre as it changes from a wound configuration 419 to a linear configuration can be observable. As such, and by using range finding techniques, the length of fibre remaining in the device can be calculated or approximated (e.g. using a processor 482 and memory 484, configured in a known manner). When a desired depth has been reached an activation device 490 may be initiated. In some example, a friction device 495, or the like, may be used in order to provide an characteristic indication in the fibre optic when the fibre is being deployed from the device 410.

It will be appreciated the providing the light source, etc., together with the deployable device, rather than at surface, allows the device to be self-contained and complex set up, connections, or ancillary equipment may not be needed. This may result in ease of use and a reduced deployment time.

It will be appreciated that aspects of the above examples may lend themselves well to ease of deployment, ease of operation, as well as reducing costs and time, and/or improving sensing capabilities within a wellbore. In addition to collecting well data, further examples of when the above devices and methods may be used could be ease of monitoring of well conditions such as sand production, well integrity (e.g. assessing leaks), flow allocation, etc., or for use in offset seismic applications or the like. For example, during seismic surveying the deployable device may be deployed in one well and configured to sense vibrations or the like from another well.

It will further be appreciated that the above device may be deployed subsequent to previous installed completion or intervention procedures installing other sensors. Further, the device may be deployed in producing or previously producing well, or indeed injector wells. The well may have ceased production/injection (e.g. may be shut in) or may be flowing during deployment. Further, it may be the case that a pre-existing optical fibre is installed in the well, e.g. a part of the overall completion. A skilled reader will appreciate that the above described devices 10, 110, 210, 310 may be used in addition to that existing fibre, and each may be used in a calibration process or the like of the other fibre.

While the above examples have generally been described in relation to a deployable member comprising a fibre optic, it will be appreciated that in some examples a fibre optic bundle may be used. That is to say, in some examples the deployable member may comprise a plurality of fibre optics. In those examples, each of the fibres may be used for dedicated purposes (e.g. one for communicating data from a tool, and the other for performing distributed sensing). However, in other examples, each of the fibre optics may be used for the same purposes. In such examples, data from the plurality of fibres can be verified by comparison and/or a level of redundancy may be established.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the invention may consist of any such individual feature or combination of features. In view of the foregoing description it will be evident to a person skilled in the art that various modifications may be made within the scope of the invention as defined by the claims that follow.

## Claims

1. A deployable device (310) for deployment in a wellbore (311), the deployable device (300) comprising:
a deployable member (317) comprising a fibre optic, the deployable member being stored in a first configuration prior to deployment wherein the deployable member (317) comprises a selected section having an imparted pre-twist so as to assist with deployment of that portion of deployable member (317) when deploying to a second configuration such that, when deployed, the deployable member (317) comprises a section that is linear and a section comprising one or more coiled portions (319), and
wherein the deployable member (317) is configured to permit distributed sensing using the deployed fibre optic when in the second configuration.

2. The deployable device (310) according to claim 1, wherein the deployable device (310) further comprises rotational elements (360a, 360b) that interact with fluid in a wellbore (311) in order to impart a rotation of the deployable device (310) during deployment.

3. The deployable device (310) accordingly to claim 1 or 2, wherein the device is configured to permit controlled deployment of the device in a wellbore, and comprises a friction device configured to impart a selective friction force to the deployable member, when being deployed, so as to selectively control deployment.

4. The deployable device (310) according to any preceding claim, wherein the device (310) is configured such that the one or more coiled portions (319) of fibre optical are provided at one or more sections along the length of the deployable member (317).

5. The deployable device (310) according to claim 3 or 4, further comprising a tool for deployment in the wellbore, the tool comprising a drift, wherein the drift comprises one or more sensors configured to measure well conditions, and wherein the sensors are configured to communication sensed conditions using the fibre optic of the deployable member..

6. The deployable device (310) according to any preceding claim, wherein the device (310) is configured to retain some of the deployable member with the device, when in the second configuration, in order to provide at least one of the coiled portions (319) of fibre optic.

7. The deployable device (310) according to claim 6, wherein the device (310) comprises two or more device sections (310a, 310b), the device sections (310a, 310b) being configured to cascade deployment of the deployable member (317), and wherein each section (310a, 310b) is configured to retain some of the deployable member with device, when in the second configuration, in order to provide the coiled portion (319) of fibre optic.

8. The deployable device (310) according to any of the claims 1 to 8, wherein the deployable member (317) comprises two or more different coating characteristics at different portions of the deployable member (317).

9. The deployable device (310) according to claim 8, wherein some of the deployable member (317) comprises a reinforcing and/or protective coating surrounding the fibre optic, and optionally wherein that coating comprises Kevlar.

10. The deployable device (310) according to claim 8, wherein the different coating characteristics are configured to provide controlled deployment of the device (310) in a wellbore (311).

11. The deployable device (310) according to any of the claims 1 to 10, wherein the deployable member (317) is configured to permit distributed acoustic sensing using the deployed fibre optic when in the second configuration.

12. The deployable device (310) according to any of the claims 1 to 11, wherein the device (310) is configured to be deployed in the wellbore (311) in a non-permanent manner, and optionally wherein the deployable member (317) is configured to be deployed in a wellbore for 1 day or less.

13. The deployable device (310) according to any of the claims 1 to 12, wherein the device (310) is configured to be disposable in the wellbore (311).

14. A distributed sensing arrangement comprising a deployable device (310) according to any of the claims 1 to 13, and a fibre optic module for provide distributed sensing, wherein the fibre optic module is in operative communication with the fibre optic of the deployable member (317).

15. A method for deploying a fibre optic in a wellbore, comprising:
storing a deployable member (317) comprising a fibre optic in a first configuration with a deployable device (310) wherein the deployable member (317) comprises a selected section having an imparted pre-twist, and
deploying the deployable device (310) to a second configuration in the wellbore (311) such that the selected section of deployable member (317) stored with an imparted pre-twist assists with deployment of that portion to the second configuration such that, when deployed, the deployable member (317) comprises a section that is linear and a section comprising a coiled portion (319), and
wherein the deployable member (317) and fibre optic are configured to permit subsequent distributed sensing using the deployed fibre optic.

## Patentansprüche

1. Einsetzbare Vorrichtung (310) zum Einsetzen in einem Bohrloch (311), wobei die einsetzbare Vorrichtung (300) umfasst:
ein einsetzbares Element (317), das einen Lichtwellenleiter umfasst, wobei das einsetzbare Element vor dem Einsatz in einer ersten Anordnung gelagert wird, wobei das einsetzbare Element (317) einen ausgewählten Abschnitt mit einer übertragenen Vorverdrillung umfasst, um den Einsatz dieses Abschnitts des einsetzbaren Elements (317) bei dem Einsetzen in eine zweite Anordnung derart zu unterstützen, dass das einsetzbare Element (317), wenn es eingesetzt wird, einen linearen Abschnitt und einen Abschnitt umfasst, der einen oder mehrere gewickelte Abschnitte (319) umfasst, und
wobei das einsetzbare Element (317) so konfiguriert ist, dass es in der zweiten Anordnung eine verteilte Erfassung unter Verwendung des eingesetzten Lichtwellenleiters ermöglicht.

2. Einsetzbare Vorrichtung (310) nach Anspruch 1, wobei die einsetzbare Vorrichtung (310) ferner Rotationselemente (360a, 360b) umfasst, die mit Flüssigkeit in einem Bohrloch (311) interagieren, um eine Rotation der einsetzbaren Vorrichtung (310) während des Einsatzes zu übertragen.

3. Einsetzbare Vorrichtung (310) nach Anspruch 1 oder 2, wobei die Vorrichtung so konfiguriert ist, dass sie einen kontrollierten Einsatz der Vorrichtung in ein Bohrloch ermöglicht, und eine Reibungsvorrichtung umfasst, die so konfiguriert ist, dass sie eine einstellbare Reibungskraft derart auf das einsetzbare Element überträgt, wenn es eingesetzt wird, dass das Einsetzen selektiv kontrolliert werden kann.

4. Einsetzbare Vorrichtung (310) nach einem der vorhergehenden Ansprüche, wobei die Vorrichtung (310) so konfiguriert ist, dass der eine oder die mehreren gewickelten Abschnitte (319) des Lichtwellenleiters an einem oder mehreren Abschnitten entlang der Länge des einsetzbaren Elements (317) bereitgestellt sind.

5. Einsetzbare Vorrichtung (310) nach Anspruch 3 oder 4, ferner umfassend ein Werkzeug zum Einsetzen in das Bohrloch, wobei das Werkzeug einen Dorn umfasst, wobei der Dorn einen oder mehrere Sensoren umfasst, die zum Messen der Bohrlochbedingungen konfiguriert sind, und wobei die Sensoren so konfiguriert sind, dass sie die erfassten Bedingungen unter Verwendung des Lichtwellenleiters des einsetzbaren Elements vermitteln.

6. Einsetzbare Vorrichtung (310) nach einem der vorstehenden Ansprüche, wobei die Vorrichtung (310) so konfiguriert ist, dass sie in der zweiten Anordnung einen Teil des einsetzbaren Elements in der Vorrichtung einbehält, um mindestens einen der gewickelten Abschnitte (319) des Lichtwellenleiters bereitzustellen.

7. Einsetzbare Vorrichtung (310) nach Anspruch 6, wobei die Vorrichtung (310) zwei oder mehr Vorrichtungsabschnitte (310a, 310b) umfasst, wobei die Vorrichtungsabschnitte (310a, 310b) so konfiguriert sind, dass sie den Einsatz des einsetzbaren Elements (317) kaskadieren, und wobei jeder Abschnitt (310a, 310b) so konfiguriert ist, dass er in der zweiten Anordnung einen Teil des einsetzbaren Elements in der Vorrichtung einbehält, um den gewickelten Abschnitt (319) des Lichtwellenleiters bereitzustellen.

8. Einsetzbare Vorrichtung (310) nach einem der Ansprüche 1 bis 8, wobei das einsetzbare Element (317) zwei oder mehr unterschiedliche Beschichtungseigenschaften an verschiedenen Abschnitten des einsetzbaren Elements (317) aufweist.

9. Einsetzbare Vorrichtung (310) nach Anspruch 8, wobei ein Teil des einsetzbaren Elements (317) eine den Lichtwellenleiter umgebende Verstärkungs- und/oder Schutzbeschichtung umfasst und wobei diese Beschichtung gegebenenfalls Kevlar umfasst.

10. Einstellbare Vorrichtung (310) nach Anspruch 8, wobei die verschiedenen Beschichtungseigenschaften so konfiguriert sind, dass sie einen kontrollierten Einsatz der Vorrichtung (310) in einem Bohrloch (311) bereitstellen.

11. Einsetzbares Element (310) nach einem der Ansprüche 1 bis 10, wobei das einsetzbare Element (317) so konfiguriert ist, dass es in der zweiten Anordnung eine verteilte akustische Erfassung unter Verwendung des eingesetzten Lichtwellenleiters ermöglicht.

12. Einsetzbare Vorrichtung (310) nach einem der Ansprüche 1 bis 11, wobei die Vorrichtung (310) so konfiguriert ist, in dem Bohrloch (311) auf nicht dauerhafte Weise eingesetzt zu werden, und wobei gegebenenfalls das einsetzbare Element (317) so konfiguriert ist, dass es für höchstens 1 Tag in einem Bohrloch eingesetzt wird.

13. Einstellbare Vorrichtung (310) nach einem der Ansprüche 1 bis 12, wobei die Vorrichtung (310) so konfiguriert ist, dass sie in dem Bohrloch (311) wegwerfbar ist.

14. Verteilte Erfassungsanordnung, umfassend eine einsetzbare Vorrichtung (310) nach einem der Ansprüche 1 bis 13 und ein Lichtwellenleitermodul zum Bereitstellen einer verteilten Erfassung, wobei das Lichtwellenleitermodul in wirksamer Kommunikation mit dem Lichtwellenleiter des einsetzbaren Elements (317) steht.

15. Verfahren zum Einsetzen eines Lichtwellenleiters in ein Bohrloch, umfassend:
Lagern eines einsetzbaren Elements (317), das einen Lichtwellenleiter umfasst, in einer ersten Anordnung mit einer einsetzbaren Vorrichtung (310), wobei das einsetzbare Element (317) einen ausgewählten Abschnitt mit einer übertragenen Vorverdrillung umfasst, und
Einsetzen der einsetzbaren Vorrichtung (310) in eine zweite Anordnung in dem Bohrloch (311) derart, dass der ausgewählte Abschnitt des einstellbaren Elements (317), der mit einer übertragenen Vorverdrillung gelagert ist, das Einsetzen dieses Abschnitts in die zweite Anordnung derart unterstützt, dass das einstellbare Element (317), wenn es eingesetzt wird, einen linearen Abschnitt und einen Abschnitt umfasst, der einen gewickelten Abschnitt (319) umfasst, und
wobei das einsetzbare Element (317) und der Lichtwellenleiter so konfiguriert sind, dass sie eine nachfolgende verteilte Erfassung unter Verwendung des eingesetzten Lichtwellenleiters ermöglichen.

## Revendications

1. Dispositif déployable (310) pour déploiement dans un puits de forage (311), le dispositif déployable (300) comprenant :
un élément déployable (317) comprenant une fibre optique, l'élément déployable étant stocké dans une première configuration avant le déploiement, dans lequel l'élément déployable (317) comprend une section sélectionnée présentant une pré-torsion conférée de façon à aider au déploiement de cette partie de l'élément déployable (317) lors du déploiement dans une seconde configuration de sorte qu'une fois déployé, l'élément déployable (317) comprenne une section qui soit linéaire et une section comprenant une ou plusieurs partie(s) enroulée(s) (319), et
dans lequel l'élément déployable (317) est configuré pour permettre une détection distribuée en utilisant la fibre optique déployée dans la seconde configuration.

2. Dispositif déployable (310) selon la revendication 1, dans lequel le dispositif déployable (310) comprend en outre des éléments rotatifs (360a, 360b) qui interagissent avec un fluide dans un puits de forage (311) permettant de conférer une rotation du dispositif déployable (310) pendant le déploiement.

3. Dispositif déployable (310) selon la revendication 1 ou 2, dans lequel le dispositif est configuré pour permettre un déploiement contrôlé du dispositif dans un puits de forage, et comprend un dispositif de frottement configuré pour conférer une force de frottement sélective à l'élément déployable, pendant le déploiement, de façon à contrôler sélectivement le déploiement.

4. Dispositif déployable (310) selon l'une quelconque des revendications précédentes, dans lequel le dispositif (310) est configuré de sorte que l'une ou plusieurs parties enroulées (319) de la fibre optique soient ménagées sur une ou plusieurs section(s) le long de la longueur de l'élément déployable (317).

5. Dispositif déployable (310) selon la revendication 3 ou 4, comprenant en outre un outil pour le déploiement dans le puits de forage, l'outil comprenant une dérive, dans lequel la dérive comprend un ou plusieurs capteurs configurés pour mesurer des conditions du puits, et dans lequel les capteurs sont configurés pour communiquer des conditions détectées en utilisant la fibre optique de l'élément déployable.

6. Dispositif déployable (310) selon l'une quelconque des revendications précédentes, dans lequel le dispositif (310) est configuré pour retenir une partie de l'élément déployable dans le dispositif, quand il est dans la seconde configuration, pour fournir au moins une des parties enroulées (319) de la fibre optique.

7. Dispositif déployable (310) selon la revendication 6, dans lequel le dispositif (310) comprend deux sections de dispositif ou plus (310a, 310b), les sections de dispositif (310a, 310b) étant configurées pour un déploiement en cascade de l'élément déployable (317) et dans lequel chaque section (310a, 310b) est configurée pour retenir une partie de l'élément déployable dans le dispositif, quand il est dans la seconde configuration, pour fournir la partie enroulée (319) de la fibre optique.

8. Dispositif déployable (310) selon l'une quelconque des revendications 1 à 8, dans lequel l'élément déployable (317) comprend deux caractéristiques de revêtement différentes ou plus au niveau de parties différentes de l'élément déployable (317).

9. Dispositif déployable (310) selon la revendication 8, dans lequel une partie de l'élément déployable (317) comprend un revêtement de renfort et/ou de protection entourant la fibre optique et éventuellement dans lequel ce revêtement comprend du kevlar.

10. Dispositif déployable (310) selon la revendication 8, dans lequel les différentes caractéristiques de revêtement sont configurées pour fournir un déploiement contrôlé du dispositif (310) dans un puits de forage (311).

11. Dispositif déployable (310) selon l'une quelconque des revendications 1 à 10, dans lequel l'élément déployable (317) est configuré pour permettre une détection sonore distribuée en utilisant la fibre optique déployée lorsqu'il est dans la seconde configuration.

12. Dispositif déployable (310) selon l'une quelconque des revendications 1 à 11, dans lequel le dispositif (310) est configuré afin d'être déployé dans le puits de forage (311) d'une manière non-permanente et éventuellement dans lequel l'élément déployable (317) est configuré afin d'être déployé dans un puits de forage pendant 1 journée ou moins.

13. Dispositif déployable (310) selon l'une quelconque des revendications 1 à 12, dans lequel le dispositif (310) est configuré pour pouvoir être disposé dans un puits de forage (311).

14. Agencement de détection distribué comprenant un dispositif déployable (310) selon l'une quelconque des revendications 1 à 13, et un module de fibre optique permettant de fournir une détection distribuée, dans lequel le module de fibre optique est en communication opérationnelle avec la fibre optique de l'élément déployable (317).

15. Procédé de déploiement d'une fibre optique dans un puits de forage, comprenant :
le stockage d'un élément déployable (317) comprenant une fibre optique dans une première configuration avec un dispositif déployable (310) dans lequel l'élément déployable (317) comprend une section sélectionnée présentant une prétorsion conférée, et
le déploiement du dispositif déployable (310) dans une seconde configuration dans le puits de forage (311) de sorte que la section sélectionnée de l'élément déployable (317) stockée avec une prétorsion conférée aide au déploiement de cette partie dans la seconde configuration de sorte que, lorsqu'il est déployé, l'élément déployable (317) comprend une section qui est linéaire et une section comprenant une partie enroulée (319), et
dans lequel l'élément déployable (317) et la fibre optique sont configurés pour permettre une détection distribuée successive en utilisant la fibre optique déployée.
